# FASCICULE DE BREVET EUROPEEN

(11) **EP 2 268 997 B1**
(45) Date de publication et mention de la délivrance du brevet: **19.11.2014**
(21) Numéro de dépôt: 09754046.2
(22) Date de dépôt: 23.03.2009
(51) Int. Cl.: G01B 5/20, G02C 13/00, B24B 9/14, G01B 7/28, B23Q 35/26

(54) **APPAREIL DE LECTURE DE LA GÉOMETRIE D'UN CERCLE OU D'UNE ARCADE DE MONTURE DE LUNETTES ET PROCÉDÉ DE LECTURE CORRESPONDANT**
VORRICHTUNG UND VERFAHREN ZUM ERFASSEN DER GEOMETRIE DER GLASSEINFASSUNG EINES BRILLENGESTELLS
APPARATUS AND METHOD FOR ACQUIRING THE SHAPE OF A SPECTACLE FRAME CIRCLE OR ARCADE

(30) Priorité: 14.04.2008 FR 0802041
(43) Date de publication de la demande: 05.01.2011
(73) Titulaire: Essilor International (Compagnie Générale d'Optique), 94220 Charenton-le-Pont (FR)
(72) Inventeur: JONCOUR, Christian, F-94220 Charenton Le Pont (FR)
(74) Mandataire: Chauvin, Vincent
(86) Numéro de dépôt international: PCT/FR2009/000309
(87) Numéro de publication internationale: WO 2009/144396

(56) Documents cités:
- EP-A- 1 854 584
- WO-A-2007/128902
- WO-A-2008/142291
- DE-A1- 19 804 542
- FR-A- 2 637 830
- US-A- 5 485 399

## Description

### DOMAINE TECHNIQUE AUQUEL SE RAPPORTE L'INVENTION

La présente invention concerne de manière générale le domaine de la lunetterie et plus précisément l'acquisition de la forme d'un cercle ou d'une arcade d'une monture de lunettes respectivement cerclée ou semi-cerclée, en vue de l'usinage d'une lentille ophtalmique à monter sur cette monture de lunettes.

Elle concerne plus particulièrement un procédé de préparation d'une lentille ophtalmique selon le préambule de la revendication 1.

### ARRIÈRE-PLAN TECHNOLOGIQUE

La partie technique du métier de l'opticien consiste à monter une paire de lentilles ophtalmiques correctrices sur une monture de lunettes sélectionnée par un porteur. Ce montage se décompose en trois opérations principales :
- l'acquisition de la forme d'un cercle ou d'une arcade de la monture de lunettes,
- le centrage de la lentille qui consiste à positionner et à orienter convenablement cette lentille en regard de l'oeil correspondant du porteur, puis
- l'usinage de la lentille qui consiste à découper ou à détourer son contour à la forme souhaitée, compte tenu de la forme du cercle ou de l'arcade et des paramètres de centrage définis.

L'objectif concret de l'opticien est de détourer la lentille ophtalmique de manière à ce qu'elle puisse mécaniquement et esthétiquement s'adapter à la forme du cercle ou de l'arcade de la monture sélectionnée, tout en s'assurant que cette lentille exerce au mieux la fonction optique pour laquelle elle a été conçue. Une machine permettant de détourer une telle lentille ophtalmique est par exemple présente dans le document DE 198 04 542.

Dans le cas des montures de lunettes cerclées, ce détourage comporte une opération de biseautage, consistant à réaliser le long du chant de la lentille une nervure d'emboîtement destinée à s'emboîter dans une rainure parcourant le contour de la face intérieure du cercle de la monture de lunettes.

Dans le cas des montures de lunettes semi-cerclées, ce détourage comporte une opération de rainage, consistant à réaliser le long du chant de la lentille une rainure d'emboîtement dont une partie est destinée à être engagée sur une nervure parcourant la face intérieure de l'arcade de la monture de lunettes. Le maintien de la lentille dans cette arcade est alors assuré par un fil relié aux extrémités de l'arcade et inséré dans la partie restante de la rainure d'emboîtement.

Pour acquérir la forme du cercle ou de l'arcade de la monture de lunettes, on connaît par exemple des documents EP 1 854 584 et FR 2 637 830 des appareils de lecture de contours comportant des moyens de maintien agencés pour maintenir une monture de lunettes et un palpeur apte à pivoter autour d'un axe de pivotement pour glisser le long du drageoir de chaque cercle de la monture. Le palpeur est en outre monté de manière à permettre au palpeur de se mouvoir radialement par rapport à cet axe de pivotement. Un tel appareil permet donc d'obtenir la forme d'un profil longitudinal courant le long du fond du drageoir des cercles de la monture de lunettes.

Par souci d'esthétisme, on souhaite généralement positionner la lentille ophtalmique dans le cercle ou dans l'arcade de la monture de lunettes de telle manière que sa face avant affleure au mieux le rebord avant du cercle ou de l'arcade.

Dans ce dessein, il est par exemple connu du document WO 2007/128902 de palper tout d'abord longitudinalement le fond du drageoir d'un cercle d'une monture de lunettes cerclée afin d'acquérir la forme du contour du cercle, puis transversalement une section de ce drageoir afin d'acquérir la distance séparant le fond du drageoir et le rebord avant du cercle. Au cours de l'opération de biseautage, la nervure d'emboîtement est alors réalisée de manière à s'étendre à une distance de la face avant de la lentille qui est constante et égale à la distance acquise. Ainsi, une fois la lentille ophtalmique emboîtée dans le cercle, sa face avant affleure sensiblement le rebord avant du cercle.

Cette méthode présente toutefois une précision peu satisfaisante. En effet, un cercle d'une monture de lunettes présente généralement une section de forme non uniforme (le cercle peut par exemple être légèrement vrillé), si bien que la distance séparant le fond du drageoir et le rebord avant du cercle varie. Ainsi, lorsque cette distance est mesurée en une seule section transversale du cercle, la lentille obtenue après usinage présente une face avant qui affleure généralement le rebord avant du cercle qu'en cette seule section palpée.

Il est par ailleurs exposé, dans ce même document, de palper plusieurs sections transversales du cercle de la monture de lunettes, ce qui permettrait d'acquérir la distance séparant le fond du drageoir et le rebord avant du cercle en plusieurs zones du contour de ce cercle. Une telle méthode serait toutefois fastidieuse et longue à mettre en oeuvre.

### OBJET DE L'INVENTION

Afin de remédier aux inconvénients précités de l'état de la technique, la présente invention propose un nouveau procédé de lecture spécialement adapté à déterminer rapidement et avec précision la distance séparant le drageoir du cercle ou la nervure de l'arcade et le rebord avant de ce cercle ou de cette arcade.

Plus particulièrement, on propose selon l'invention un procédé de lecture tel que défini dans la revendication 1.

Le patin d'appui en V est donc adapté à être engagé sur le cercle ou sur l'arcade pour coulisser le long de ce dernier. Il comporte ainsi deux faces principales d'appui, dont l'une est adaptée à venir au contact et à coulisser le long de la face intérieure du cercle ou de l'arcade tandis que l'autre est adaptée à venir au contact et à coulisser le long du rebord avant du cercle ou de l'arcade.

Ainsi, grâce à l'invention, le palpeur peut coulisser le long de l'ensemble du contour du cercle ou sur l'ensemble de la longueur de l'arcade afin de relever la position d'un profil longitudinal courant le long du rebord avant du cercle ou de l'arcade.

Dans le cas des montures cerclées, connaissant la position du fond du drageoir et celle de ce profil longitudinal, il est alors aisé de calculer la distance séparant le fond du drageoir et le rebord avant du cercle en tout point du contour du cercle.

Il sera alors possible de biseauter la lentille de sorte qu'une fois celle-ci emboîtée dans le cercle, sa face avant affleure sensiblement le rebord avant du cercle.

De manière homologue, dans le cas des montures semi-cerclées, connaissant la position du sommet de la nervure et celle de ce profil longitudinal courant le long du rebord avant de l'arcade, il est alors aisé de calculer la distance séparant le sommet de la nervure et le rebord avant de l'arcade en tout point de l'arcade.

Il sera alors possible de rainer la lentille de sorte qu'une fois celle-ci engagée sous l'arcade, sa face avant affleure sensiblement le rebord avant de l'arcade.

Par ailleurs, pour autant que le palpeur exerce sur le cercle ou sur l'arcade un effort de rappel d'intensité et de direction adaptées lors de la lecture de la forme du deuxième profil longitudinal, la forme en V du patin d'appui permet de s'assurer que ce patin d'appui reste engagé sur le cercle ou sur l'arcade lorsqu'il coulisse sur ce dernier, quelles que soient les variations de forme de ce cercle ou de cette arcade.

### DESCRIPTION DÉTAILLÉE D'UN EXEMPLE DE RÉALISATION

La description qui va suivre, en regard des dessins annexés, donnée à titre d'exemple non limitatif, fera bien comprendre en quoi consiste l'invention et comment elle peut être réalisée.

Sur les dessins annexés :
- la figure 1 est une vue en perspective d'un appareil de lecture de contour selon l'invention, accueillant une monture de lunettes cerclée pourvue de deux cercle ;
- la figure 2 est une vue en coupe du palpeur de l'appareil de lecture de contour de la figure 1, équipé d'un patin d'appui engagé sur l'un desdits cercles ;
- les figures 3 à 5 et 7 sont des vues en perspective de quatre variantes de réalisation du patin d'appui de la figure 2 ; et
- la figure 6 est une vue schématique d'un appareil de détourage.

La présente invention a pour objectif d'améliorer l'esthétisme de l'emboîtement d'une lentille ophtalmique dans un cercle ou dans une arcade d'une monture de lunettes respectivement cerclée ou semi-cerclée.

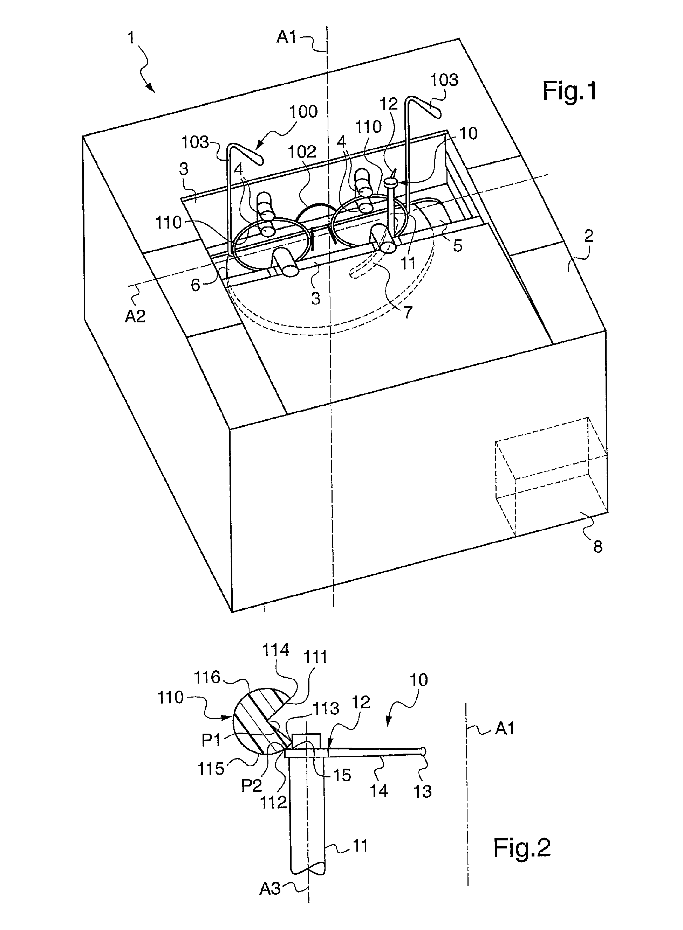

On s'intéressera plus particulièrement dans cet exposé aux montures de lunettes 100 cerclées (figure 1) comportant deux cercles 110 qui sont reliés l'un à l'autre par un pont 102 et qui sont chacun équipés d'une branche 103.

Les cercles 110, également appelés entourages, peuvent présenter des formes diverses (carrées, allongées, ovales...). Il est en effet bien entendu que le terme « cercle » utilisé n'est nullement limitatif quant à la forme de l'élément qu'il désigne. L'expression « monture cerclée » est alors utilisée par opposition à l'expression « monture percée » qui désigne des montures comportant un pont et deux branches mais qui sont dépourvues de cercles.

On peut définir par rapport à cette monture de lunettes 100 cerclée un plan général (non représenté) qui est orthogonal aux deux branches 103 de la monture de lunettes 100 lorsqu'elles sont en position déployée et qui est tangent au pont 102 de cette monture.

Chaque cercle 110 présente une face intérieure 114 bordée de deux rebords 115, 116, dont un rebord arrière 116 tourné du même côté du cercle que les branches 103 et un rebord avant 115 opposé. Le rebord avant 115 est ainsi destiné à être tourné à l'opposé du visage du porteur de la monture de lunettes 100.

Classiquement, comme le montre la figure 2, la face intérieure 114 de chaque cercle 110 est parcourue d'une rainure globalement profilée, généralement en forme de dièdre, communément appelée drageoir 111.

Le drageoir 111 s'étend suivant un profil longitudinal P1 curviligne. Ce profil longitudinal P1 correspond à l'un des brins du drageoir, qui s'étend sur l'un et/ou l'autre des flancs de ce drageoir et qui est sensiblement parallèle ou confondu avec le fond de ce drageoir. Il correspond ici au brin qui court le long du fond du drageoir 111.

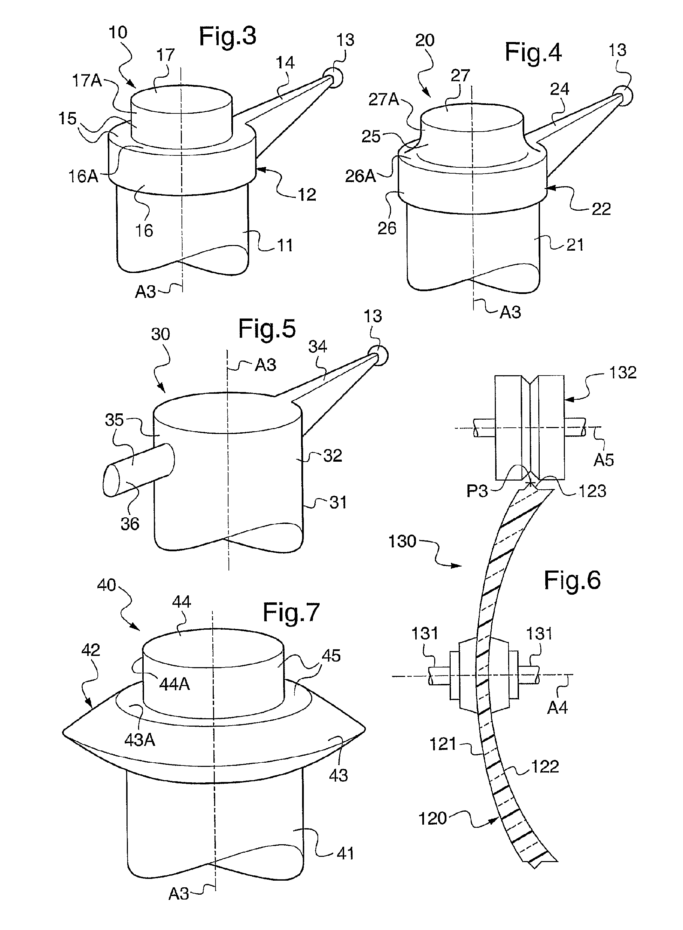

Comme le montre la figure 6, la lentille ophtalmique 120 à emboîter dans le cercle 110 correspondant de la monture de lunettes présente une face optique avant 121 convexe et une face optique arrière 122 concave. Telle que représentée sur cette figure, la lentille ophtalmique 120 a déjà été usinée et elle comporte sur son chant une nervure d'emboîtement 123 à emboîter dans le drageoir 111 de ce cercle 110.

Cette nervure d'emboîtement 123 s'étendant ici suivant un profil longitudinal déduit P3 curviligne et présente une section uniforme en V. Le profil longitudinal déduit P3 correspond à une ligne qui court le long de la nervure d'emboîtement, c'est-à-dire à un brin qui s'étend sur l'un et/ou l'autre des flancs de cette nervure d'emboîtement 123 et qui est sensiblement parallèle ou confondu avec le sommet de la nervure d'emboîtement.

Comme cela sera exposé plus en détail dans la suite, la forme de ce profil longitudinal déduit P3 (en fonction de laquelle la lentille ophtalmique est usinée) est déduit de la forme du profil longitudinal P1 du drageoir 111 du cercle 100 et d'un profil longitudinal P2 du rebord avant 115 du cercle 110.

Ce profil longitudinal P2 curviligne correspond à un brin qui court le long du rebord avant 115 du cercle 110 et qui s'étend sensiblement parallèlement au fond du drageoir 111, à proximité de la face intérieure 114 du cercle 110.

### Dispositif

Pour acquérir ces profils longitudinaux P1, P2, selon le procédé de l'invention, on utilise un appareil de lecture de contour 1, appareil non revendiqué, tel que par exemple celui représenté sur la figure 1.

Cet appareil comporte un châssis 5 qui est recouvert d'un capot supérieur 2 et qui accueille la monture de lunettes 100.

Le châssis 5 comporte des moyens de maintien de cette monture de lunettes 100, formés ici par deux mâchoires 3 mobiles pourvues de paires de plots 4 aptes à enserrer les cercles 110 de la monture de lunettes 100.

L'appareil de lecture de contour 1 comporte en outre un palpeur 10 muni d'une tige support 11 d'axe longitudinal A3 et d'une tête de lecture 12 adaptée à suivre par contact les profils longitudinaux P1, P2 du cercle 110 de la monture de lunettes 100, en tournant autour d'un axe de rotation A1.

Le palpeur 10 comporte à cet effet quatre mobilités par rapport au châssis 5, qui lui permettent de suivre les deux profils longitudinaux P1, P2.

On décrira ici une architecture particulière de l'appareil de lecture conférant au palpeur ses différentes mobilités, mais cette architecture n'est qu'un exemple de réalisation de l'appareil de lecture parmi d'autres.

Ici, l'appareil de lecture de contour 1 comporte une platine (non visible) qui peut se déplacer en translation sur le châssis 5 selon un axe de transfert A2. Sur cette platine est monté un plateau tournant 6. Ce plateau tournant 6 est ainsi apte à prendre deux positions sur l'axe de transfert A2, en regard de chacun des deux cercles 110 de la monture de lunettes 100.

Le plateau tournant 6 possède un axe de rotation A1 défini comme l'axe normal à la face avant de ce plateau tournant 6 et passant par son centre. Il est adapté à pivoter autour de cet axe par rapport à la platine. Le plateau tournant 6 comporte par ailleurs une lumière 7 oblongue en forme d'arc de cercle au travers de laquelle le palpeur 10 fait saillie.

L'appareil de lecture de contour 1 comporte en outre des moyens d'actionnement pour déplacer la platine suivant l'axe de transfert A2, pour faire tourner le plateau tournant 6 autour de son axe de rotation 1, pour faire glisser la tige support 11 du palpeur 10 le long de la lumière 7, pour modifier la hauteur de la tête de palpage 12 par rapport au plan du plateau tournant 6, et enfin pour faire pivoter la tige support 11 du palpeur 10 autour de son axe longitudinal A3.

L'appareil de lecture de contour 1 comporte enfin un dispositif électronique et/ou informatique 8 permettant, d'une part, de piloter les moyens d'actionnement de l'appareil de lecture de contour 1, et, d'autre part, d'acquérir et d'enregistrer les positions successives de la tête de lecture 12 du palpeur 10.

Comme le montrent les figures 2 et 3, le palpeur 10 est équipé d'une tête de lecture 12 comportant, d'une part, un doigt de palpage 14, et, d'autre part, un patin d'appui 15 en V qui est ouvert dans une direction opposée audit axe de rotation A1 et qui est adapté à être engagé sur ledit cercle 110 pour coulisser le long de ce dernier.

Le doigt de palpage se présente ici sous la forme d'une pointe 14 qui est dirigée perpendiculairement à l'axe longitudinal A3 de la tige support 11 et qui présente un embout 13 sphérique. Cet embout 13 est à insérer au fond du drageoir 111 du cercle 110 et à faire coulisser le long de ce drageoir 111 de manière à relever la forme du profil longitudinal P1 du drageoir 111.

En variante, ce doigt de palpage pourrait également se présenter sous d'autres formes. Il pourrait par exemple présenter une forme de tige cylindrique ou de palette pointant suivant une direction orthogonale à l'axe longitudinal A3 de la tige support 11.

Le patin d'appui 15 est quant à lui situé sur la tête de lecture 12, à l'opposé du doigt de palpage 14.

Il présente deux portions d'appui contre respectivement une partie 113 de la face intérieure 114 du cercle 110 et une partie 112 du rebord avant 115 de ce cercle 110. Ces deux portions d'appui forment ensemble, dans un plan de coupe passant par l'axe longitudinal A3 et par l'axe de rotation A1, un V dont la bissectrice est inclinée par rapport à l'axe longitudinal A3 d'un angle compris entre 40 à 50 degrés.

L'une de ces portions d'appui s'étend radialement par rapport à l'axe de rotation A1, si bien qu'elle est sensiblement orthogonale à cet axe de rotation A1. L'autre de ces portions d'appui s'étend axialement par rapport à l'axe de rotation A1, si bien qu'elle est sensiblement parallèle à cet axe de rotation A1.

Plus précisément, selon le mode de réalisation du palpeur 10 représenté sur les figures 2 et 3, la tête de lecture 12 comporte une couronne 16 qui est montée à l'extrémité de la tige support 11 et qui est surmontée d'un pion 17.

Cette couronne 16 peut être rapportée, par exemple par vissage, ou venir de formation avec la tige support 11.

Cette couronne 16 présente une forme cylindrique de révolution autour de l'axe longitudinal A3, de diamètre supérieur au diamètre de la tige support 11. Le pion 17 est également cylindrique de révolution autour de l'axe longitudinal A3, mais il présente un diamètre strictement inférieur au diamètre de la couronne 16. Ce pion 17 forme donc un rétrécissement de section par rapport à la couronne 16, et définit ainsi un épaulement sur l'ensemble de la périphérie de la couronne 16.

Le doigt de palpage 14 s'étend à partir de la face latérale cylindrique de cette couronne 16.

Le patin d'appui 15 en V est quant à lui formé par la couronne 16 et par le pion 17. Ce patin d'appui 15 comporte plus précisément deux faces d'appui 16A, 17A formées par la face latérale cylindrique du pion 17 et par la face supérieure plane de la couronne 16.

La différence de diamètre entre la couronne 16 et le pion 17 est préférentiellement comprise entre 4 et 10 millimètres. Par conséquent, le patin d'appui 15 présente un premier bord 16A, celui formé par la face supérieure plane de la couronne 16 (qui est sensiblement orthogonale audit axe de rotation A1 et qui est donc sensiblement parallèle au plan général dudit cercle), dont la longueur est inférieure à 5 millimètres.

Grâce à sa forme, comme le montre la figure 2, le patin d'appui 15 en V est adapté à être engagé sur le cercle 110 de manière que son premier bord 16A puisse glisser le long du profil longitudinal P2 du rebord avant 115 du cercle.

En outre, puisque la longueur de ce premier bord 16A est faible, on est assuré que le profil longitudinal P2 palpé s'étende à proximité de la face intérieure 114 du cercle, c'est-à-dire à proximité de l'embouchure du drageoir 111. Ainsi, quelle que soit la forme du cercle 110, le profil longitudinal palpé sur le rebord avant 115 du cercle s'étend à proximité de l'endroit où doit affleurer la face avant de la lentille une fois cette dernière usinée et emboîtée dans le cercle 110.

Selon un autre mode de réalisation du palpeur 20 représenté sur la figure 4, le pion 27 de la tête de lecture 22 présente une face latérale non cylindrique. Dans ce mode de réalisation, la tige support 21 ainsi que la couronne 26 et le doigt de palpage 24 de la tête de lecture 22 présentent des formes identiques à celles exposées précédemment. Le pion 27 présente en revanche une forme de solide symétrique de révolution autour de l'axe longitudinal A3, dont la génératrice est incurvée vers l'axe longitudinal A3 de la tige support 21. En d'autres termes, ce pion 27 présente une forme d'hyperboloïde dont la base est confondue avec la face supérieure de la couronne 26 et dont le sommet présente un diamètre inférieur.

Le patin d'appui 25 en V est alors entièrement formé par la face latérale de ce pion 27.

Grâce à sa forme, ce patin d'appui 25 en V est adapté à être engagé sur le cercle 110 de manière qu'une première partie 16A de sa face latérale (située à proximité de sa base) puisse glisser le long du profil longitudinal P2 du rebord avant 115 du cercle et qu'une autre partie 17A de sa face latérale (située à proximité de son sommet) puisse glisser le long de la face intérieure 114 du cercle.

Le palpeur 30 représenté sur la figure 5, palpeur non revendiqué, présente quant à lui une tête de lecture 32 formée par l'extrémité libre de la tige support 31, par le doigt de palpage 34 qui s'étend à partir de la face latérale cylindrique de cette extrémité libre, et par une baïonnette 36 qui s'étend en saillie de la face latérale cylindrique de cette extrémité libre, à l'opposé du doigt de palpage 34.

Cette baïonnette 36 présente ici une forme cylindrique de révolution autour d'un axe perpendiculaire à l'axe longitudinal A3 de la tige support 31.

Le patin d'appui 35 en V est alors formé par la face latérale cylindrique de l'extrémité libre de la tige support 31 et par la baïonnette 36.

Ainsi, grâce à sa forme, ce patin d'appui 35 en V est adapté à être engagé sur le cercle 110 de manière que la baïonnette 36 puisse glisser le long du profil longitudinal P2 du rebord avant 115 du cercle 110 et que la face latérale cylindrique de l'extrémité libre de la tige support 31 puisse glisser le long de la face intérieure 114 du cercle 110.

Quelle que soit la forme de la tête de lecture 12 ; 22 ; 32, le patin d'appui 15 ; 25 ; 35 doit, pour être engagé sur le cercle 110, être positionné face à ce cercle. La tête de lecture 12 ; 22 ; 32 doit donc présenter une mobilité de pivotement de manière à pouvoir alternativement sélectionner le doigt de palpage 14 ; 24 ; 34 pour palper le profil longitudinal P1 ou le patin d'appui 15 ; 25 ; 35 pour palper le profil longitudinal P2.

Ainsi, lors du palpage du profil longitudinal P2, la tête de lecture 12 sera pilotée de telle sorte que le doigt de palpage 14 soit tourné vers l'intérieur, c'est-à-dire vers l'axe de rotation A1.

Dans l'exemple illustré sur la figure 1, cette mobilité est obtenue par la mobilité de pivotement de la tige support 11 autour de son axe longitudinal A3.

En variante, on pourra prévoir que l'appareil de lecture de contour 1 soit dépourvu de cette mobilité de pivotement. On pourra alors prévoir que la tête de lecture soit amovible manuellement et qu'elle puisse être montée sur la tige support avec deux orientations différentes. On pourra également prévoir deux têtes de lecture interchangeables, dont l'une porte le doigt de palpage tandis que l'autre porte le patin d'appui.

Selon une autre variante, pour simplifier les algorithmes de pilotage du palpeur 10, on pourra également prévoir de palper le brin longitudinal P2 du rebord avant 115 du cercle 110 sans faire pivoter la tête de lecture autour de l'axe longitudinal, mais plutôt en utilisant comme patin d'appui l'épaulement formé par le pion 17 et par le doigt de palpage 14.

Dans cette variante, lors du palpage du profil longitudinal P2, le doigt de palpage 14 sera tourné vers l'extérieur, de la même manière que lorsqu'il acquiert la géométrie du drageoir 111.

On pourra aussi prévoir que le palpeur comporte trois mobilités de translation pour se déplacer dans les trois dimensions de l'espace. Un tel appareil de lecture de contour est par exemple présenté dans le document EP 0 291 378 et dans le document US 4 995 170. Il comporte des moyens d'actionnement du palpeur suivant trois directions orthogonales les unes aux autres.

On pourra aussi prévoir, comme le montre la figure 7, que la tête de lecture 42 du palpeur 40 soit formée par un disque 43 surmonté d'un pion 44 et fixé à l'extrémité libre de la tige support 41.

Ce disque 43 est ici formé de deux cônes tronqués superposés, dont les sommets sont tournés à l'opposé l'un de l'autre. Ce disque 43 présente une forme de révolution autour de l'axe longitudinal A3, et un diamètre maximum supérieur au diamètre de la tige support 41. Le pion 44 est quant à lui cylindrique de révolution autour de l'axe longitudinal A3, et il présente un diamètre strictement inférieur au diamètre minimum du disque 43. Ce pion 44 forme donc un rétrécissement de section par rapport au disque 43, et définit ainsi un épaulement sur l'ensemble de la périphérie de la tête de lecture 42.

Le patin d'appui 45 en V est formé par cet épaulement. Il comporte plus précisément deux faces d'appui 43A, 44A formées par la face latérale cylindrique du pion 44 et par la face supérieure plane d'une extrémité tronquée du disque 43.

Grâce à sa forme symétrique de révolution, le disque 43 peut être engagé dans le drageoir 111 de l'entourage 110 pour glisser le long du profil longitudinal P1 afin d'acquérir la forme de ce dernier, en conservant une orientation constante autour de son axe longitudinal A3.

Pour palper l'ensemble du drageoir 111 du cercle 110, le palpeur 40 suit une trajectoire correspondant au profil longitudinal P1. On peut alors assimiler l'axe qui est parallèle à l'axe longitudinal A3 et qui passe par le barycentre de ce premier profil longitudinal P1, à un axe de rotation du palpeur. Cet axe de rotation n'est bien sûr pas un axe mécanique de l'appareil de lecture de contour, mais plutôt un axe géométrique abstrait.

Le patin d'appui 45 en V est ainsi adapté à être engagé sur le cercle 110 de manière que son premier bord 43A puisse glisser le long du rebord avant 115 du cercle 110 afin de relever la forme du profil longitudinal P2.

Pour préparer la lentille ophtalmique 120, il est par ailleurs connu d'utiliser un appareil de détourage 130 qui ne fait pas en propre l'objet de la présente invention. Un tel appareil de détourage, bien connu de l'Homme du métier, est par exemple décrit dans le document US 6 327 790 ou commercialisé par la demanderesse sous la marque Kappa CTD.

Comme le montre la figure 6, un tel appareil de détourage 130 comprend généralement des moyens de support ici formés par des arbres 131 de maintien et d'entraînement en rotation de la lentille ophtalmique 120 autour d'un axe de blocage A4. Un tel appareil de détourage comprend en outre des moyens de détourage ici formés par un outil d'usinage 132 monté rotatif autour d'un axe d'usinage A5 qui est ici sensiblement parallèle à l'axe de blocage A4, mais qui pourrait également être incliné par rapport à cet axe.

L'outil d'usinage 132 et/ou les arbres 131 sont pourvus de deux mobilités relatives, dont une mobilité radiale permettant de modifier l'écartement entre l'axe de d'usinage A5 et l'axe de blocage A4, et une mobilité de translation axiale selon un axe parallèle à l'axe de blocage A4.

L'appareil de détourage 130 comporte en outre un dispositif électronique et/ou informatique (non représenté) qui est pourvu, d'une part, de moyens de communication avec le dispositif électronique et/ou informatique 8 de l'appareil de lecture de contour 1, et, d'autre part, de moyens de pilotage des mobilités des arbres 131 et de l'outil d'usinage 132. Ce dispositif électronique et/ou informatique permet en particulier de piloter, pour chaque position angulaire de la lentille 120 autour de l'axe de blocage A4, l'écartement radial entre l'outil d'usinage 132 et l'axe de blocage A4, ainsi que la position axiale de la tranche de la lentille par rapport à la surface de travail de l'outil d'usinage 132.

Comme le montre plus particulièrement la figure 6, l'outil d'usinage 132 est en l'espèce constitué par une meule principale de forme, c'est-à-dire par une meule présentant en creux, à la manière d'un négatif, un profil d'usinage complémentaire de la section de la nervure d'emboîtement 123 à obtenir en relief sur la tranche de la lentille à usiner.

### Procédé de préparation

Le procédé de préparation de la lentille ophtalmique sera ici décrit en référence à l'appareil de lecture de contour 1 représenté sur les figures 1 à 3.

Ce procédé comporte quatre étapes principales. Il comporte en particulier une étape d'acquisition de la forme du profil longitudinal P1 du drageoir 111, une étape d'acquisition du profil longitudinal P2 du rebord avant 115 du cercle 110, une étape de déduction, en fonction de la forme de ces profils longitudinaux P1 et P2, de la forme du profil longitudinal déduit P3 de la nervure d'emboîtement 123, et une étape de détourage de la lentille ophtalmique 120 suivant ce profil longitudinal déduit P3.

Au cours de la première étape, la monture de lunettes 10 choisie par le futur porteur est engagée dans l'appareil de lecture 1 (figure 1). Pour cela, la monture 100 est insérée entre les plots 4 des mâchoires 3.

Le palpeur, qui est initialement positionné au centre du plateau tournant 6, en dessous de la monture de lunettes 100, est actionné pour se placer entre deux des plots 4 d'une mâchoire 3, au contact du drageoir 111, de manière à pouvoir palper le cercle 110 correspondant de la monture de lunettes 100.

La conservation du contact du doigt de palpage 14 avec le fond du drageoir 111 est assurée par les moyens d'actionnement qui exercent sur le palpeur 10 un effort de rappel radial dirigé vers le drageoir 111. Cet effort de rappel radial permet ainsi d'éviter que le doigt de palpage 14 ne remonte le long de l'un ou de l'autre des flancs du drageoir 111 et qu'il ne sorte de celui-ci.

Le dispositif électronique et/ou informatique 8 pilote alors les moyens d'actionnement du plateau tournant 6 de sorte que le doigt de palpage 14 du palpeur 10 se déplace continûment le long du fond du drageoir 111, en restant au contact du fond du drageoir 111 grâce audit effort de rappel radial.

Le dispositif électronique et/ou informatique 8 relève pendant la rotation du plateau tournant 6 les coordonnées spatiales d'une pluralité de points du profil longitudinal P1 du drageoir 111, par exemple 360 points, pour mémoriser une image numérique précise de ce profil.

A l'issue de cette étape, le palpeur 10 est commandé pour se replacer en position initiale, au centre du plateau tournant 6, en dessous de la monture de lunettes 100.

Au cours de la seconde étape, le dispositif électronique et/ou informatique 8 commande le pivotement de la tige support 11 autour de son axe longitudinal A3, de manière que la tête de lecture 12 effectue un demi-tour sur elle-même.

Puis, le dispositif électronique et/ou informatique 8 pilote en combinaison les moyens d'actionnement du plateau tournant 6 et de la tige support 11 de manière que cette dernière se place au centre du cercle 110, c'est-à-dire au centre du profil longitudinal P1 précédemment palpé. La tige support est plus précisément positionnée de telle sorte que la face supérieure du pion 17 de sa tête de lecture 12 soit située 1 millimètre en dessous du premier point palpé du profil longitudinal P1 du drageoir 111.

Le plateau tournant 6 et la tige support sont ensuite actionnés de manière que la tête de lecture 12 du palpeur 10 se déplace dans un plan parallèle à la face supérieure du plateau tournant 6, en direction du premier point palpé du profil longitudinal P1 du drageoir 111, jusqu'à ce que la face latérale cylindrique du pion 17 de la tête de lecture 12 entre en contact avec la face intérieure 114 du cercle 111. Ce contact peut éventuellement être décelé par un capteur prévu à cet effet dans les moyens d'actionnement. Les moyens d'actionnement sont alors pilotés pour s'arrêter.

Puis, le dispositif électronique et/ou informatique 8 pilote les moyens d'actionnement du palpeur 10 pour que ce dernier s'élève par rapport au plan du plateau tournant 6, jusqu'à ce que la face supérieure 16A de la couronne 16 entre au contact du rebord avant 115 du cercle.

Dans cette position représentée sur la figure 2, le patin d'appui 15 est correctement engagé sur le cercle 110 puisqu'il est au contact de deux points 112, 113 distincts du cercle.

Les moyens d'actionnement sont alors pilotés pour exercer sur le palpeur 10 un effort de rappel oblique dirigé suivant la bissectrice du V du patin d'appui 15, ce qui assure la conservation du contact du patin d'appui 15 avec la face intérieure 114 et avec le rebord avant 115 du cercle 110.

Le plateau tournant 6 est alors piloté pour effectuer une révolution complète autour de son axe de rotation A1, de manière que le patin d'appui 15 coulisse le long de l'ensemble du cercle 110.

Le dispositif électronique et/ou informatique 8 relève pendant la rotation du plateau tournant 6 les coordonnées spatiales d'une pluralité de points du profil longitudinal P2 du rebord avant 115 du cercle, par exemple 360 points. En variante, il peut être prévu que ce dispositif électronique et/ou informatique 8 ne relève que la différence de hauteur (suivant l'axe de rotation A1) entre les deux profils longitudinaux P1, P2.

On peut prévoir qu'au cours de cette révolution complète, le palpeur 10 soit actionné pour contourner les plots 4 de manière que sa tête de lecture 12 n'entre pas en contact avec ces plots. Le profil longitudinal P2 présentera alors deux zones non palpées. Les coordonnées des points non palpés de ce profil longitudinal P2 pourront alors être calculés par interpolation, en fonction des coordonnées des points palpés de ce profil.

Ce calcul d'interpolation pourra éventuellement être affiné si les plots 4 sont munis de capteurs permettant de déterminer leurs positions par rapport au châssis 5. En effet, l'un de ces plots 4 est au contact du rebord avant 115 du cercle 110, ce qui permet de déterminer la hauteur de ce rebord avant 115 suivant l'axe de rotation A1.

A l'issue de cette seconde étape, on peut prévoir de mémoriser les coordonnées spatiales des points palpés du profil longitudinal P2 dans un registre de base de données accessible à un opticien ou dans un registre de base de données partagé, accessible à une pluralité d'opticiens travaillant en des lieux éloignés.

Préférentiellement alors, ce registre de base de données comporte une pluralité d'enregistrements chacun associés à un type de montures de lunettes référencé, c'est-à-dire généralement à un modèle de montures de lunettes. Chaque enregistrement contient une référence de ce type de montures de lunettes et des données de forme relatives à un profil longitudinal courant le long du rebord avant d'un des cercles des montures de ce type. En pratique, la référence sera formée par le nom du modèle de la monture de lunettes tandis que les données de formes seront formées par une chaîne de caractères comportant les coordonnées spatiales des 360 points du profil longitudinal correspondant.

Avant de mémoriser les coordonnées spatiales des points palpés du profil longitudinal P2 dans le registre, il est prévu de rechercher parmi les enregistrements existant la référence de la monture afin de vérifier qu'aucun enregistrement ne corresponde déjà à cette monture. Puis, si aucun enregistrement n'est trouvé, l'opticien crée un nouvel enregistrement avec la référence de la monture ainsi qu'une chaîne de caractères comportant les coordonnées spatiales des 360 points du profil longitudinal P2.

Au cours de la troisième étape, le dispositif électronique et/ou informatique 8 procède au calcul de la forme du profil longitudinal déduit P3. Cette forme permettra ainsi de déterminer une consigne de détourage de la lentille ophtalmique 120 par l'appareil de détourage 130.

Les cordonnées spatiales des 360 points du profil longitudinal déduit P3 sont ici calculées en fonction de celles des 360 points des deux profils longitudinaux P1, P2.

Plus précisément, les coordonnées radiales et angulaires, par rapport à l'axe de rotation A1, des 360 points du profil longitudinal déduit P3 sont calculées en fonction de celles des 360 points du profil longitudinal P1 du drageoir 11.

Elles sont plus précisément calculées de manière que les projections de ces profils longitudinaux P1 et P3 dans un plan orthogonal à l'axe de rotation A1 soient confondues ou soient homothétiques.

Le rapport d'homothétie est calculé en fonction des formes des sections transversales du drageoir 111 et de la gorge de biseautage de l'outil d'usinage 132. Ce rapport d'homothétie permet de tenir compte du fait que, une fois la lentille emboîtée dans le cercle, le sommet de la nervure d'emboîtement (correspondant au profil longitudinal déduit P3) n'est jamais au contact du fond du drageoir (correspondant au profil longitudinal P1) mais est légèrement décalé par rapport à ce dernier.

Les coordonnées axiales, suivant l'axe de rotation A1, des 360 points du profil longitudinal déduit P3 sont quant à elles calculées en fonction de celles des 360 points des profils longitudinaux P1, P2 du drageoir 111 et du rebord avant 115 du cercle.

Concrètement, le calcul des coordonnées axiales des 360 points du profil longitudinal déduit P3 est réalisé de sorte que la face avant 121 de la lentille ophtalmique 120 affleure le rebord avant 115 du cercle 110 en un nombre N de sections transversales du cercle 110. On comprend en effet qu'étant données les différences de formes entre le drageoir 111 et le contour de la face avant 121 de la lentille ophtalmique, il n'est pas possible que la face avant 121 de la lentille affleure le rebord avant 115 du cercle sur l'ensemble de son contour.

Ce nombre N est paramétrable par l'utilisateur. On peut prévoir en variante qu'il soit automatiquement calculé de manière à être maximum. En variante encore, il peut être calculé de manière que la moyenne des écarts entre le contour de la face avant 121 de la lentille et le rebord avant 115 du cercle soit minimum.

Pour mémoire, on dit ici que le contour de la face avant de la lentille ophtalmique 120 affleure le rebord avant 115 du cercle 110 en une section donnée lorsque dans cette section, le point du contour de la face avant 121 de la lentille et le point du profil longitudinal P2 (situé sur le rebord avant 115) sont au même niveau sur l'axe de rotation A1.

Enfin, au cours d'une quatrième et dernière étape, l'appareil de détourage 130 procède au détourage de la lentille ophtalmique 120.

Les arbres 131 de support de la lentille et/ou l'outil de détourage 132 sont à cet effet pilotés en fonction de la géométrie du profil longitudinal déduit P3, de manière à réaliser sur le chant de la lentille 120 la nervure d'emboîtement 123 suivant ce profil.

Grâce à l'invention, le sommet de la nervure d'emboîtement 123 ainsi obtenue s'étend à une distance de la face avant 121 de la lentille ophtalmique 120 dont les variations sont sensiblement identiques aux variations d'écart entre le rebord avant 115 et le fond du drageoir 111 le long du cercle 110.

On s'assure ainsi qu'une fois emboîtée dans le cercle 110, la face avant de la lentille ophtalmique 120 affleure au mieux le rebord avant 115 du cercle 110.

La présente invention n'est nullement limitée au mode de réalisation décrit et représenté, mais l'homme du métier saura y apporter toute variante entrant dans le cadre de l'invention telle que définie.

Cette invention trouvera en particulier une application avantageuse lorsqu'elle sera mise en oeuvre par des clients (les opticiens) dits « donneurs d'ordre » qui sous-traitent la fabrication et le détourage des lentilles.

Plus précisément, considérons ici, d'une part, un terminal-client installé du côté d'un client pour la commande de lentilles, et, d'autre part, un terminal-fabricant installé du côté d'un fabricant de lentilles pour la fabrication et le détourage de lentilles.

Le terminal-client comporte des moyens informatiques pour enregistrer et transmettre des données de commande de la lentille ophtalmique 120, par exemple via un protocole de communication par IP (de type Internet). Ces données de commande comportent des données de prescription de correction visuelle (par exemple des données de puissance optique, de centrage...) et des données relatives à la monture.

Le terminal-fabricant comporte quant à lui des moyens informatiques pour recevoir et enregistrer les données de commande transmises par le terminal-client. Il comporte en outre un dispositif de fabrication de la lentille ophtalmique conformément aux données de prescription, comprenant par exemple des moyens de moulage de la lentille et/ou d'usinage de l'une au moins des faces optiques de la lentille.

Il comporte également un dispositif de détourage de cette lentille ophtalmique conformément aux données relatives à la monture. Ce dispositif de détourage est en particulier conçu pour mettre en oeuvre la quatrième étape du procédé exposé précédemment.

La mise en oeuvre de ce procédé de préparation de lentilles est ici également réalisé en quatre étapes.

Au cours d'une première étape, le client palpe la monture de lunettes choisie par le client selon les deux premières étapes du procédé précédemment exposé. Il en déduit des données de forme des deux profils longitudinaux P1 et P2 palpés. Ces données de forme peuvent par exemple être composées d'une chaîne de caractère comportant les coordonnées spatiales des 720 points des deux profils longitudinaux P1 et P2 palpés.

Puis, au cours d'une seconde étape, il émet via le terminal-client des données de commande d'une lentille. Ces données comportent les prescriptions optiques du porteur et lesdites données de forme.

Au cours d'une troisième étape, le fabricant qui reçoit ces données de commande procède au moulage de la lentille et/ou à l'usinage de l'une au moins de ses faces optiques. Pour calculer la forme des deux faces optiques de la lentille, il prend en compte, outre les données de prescription de correction visuelle, les données de forme de manière à ce que la périphérie de la face avant de la lentille affleure au mieux le rebord avant de la monture.

Enfin, au cours d'une quatrième étape, le fabricant calcule la forme du profil longitudinal déduit P3 en fonction desdites données de forme. Puis, il détoure la lentille ophtalmique 120 en fonction des données de forme reçues, suivant le profil longitudinal déduit P3.

L'exposé a jusqu'ici fait référence aux montures de lunettes cerclées. Bien sûr, le procédé exposé est également applicable aux montures de lunettes semi-cerclées.

Pour mémoire, ces montures de lunettes comportent des arcades, également connues sous le nom de demi-cercles ou demi-entourages, reliées entre elles par un pont et munies chacune d'une branche. Chaque arcade présente une face intérieure, le long de laquelle court une nervure d'emboîtement, qui est bordée d'un rebord arrière destiné à être tourné vers le visage du porteur de la monture de lunettes et d'un rebord avant opposé.

Le palpage du profil longitudinal qui s'étend sur le rebord avant de chaque arcade peut alors être réalisé avec l'un ou l'autre des palpeurs précédemment exposés, le patin d'appui en V de ce palpeur étant ici adapté à s'engager sur l'arcade, en dessous de la nervure d'emboîtement.

## Revendications

1. Procédé de préparation d'une lentille ophtalmique (120) en vue de son montage dans un cercle (110) ou une arcade d'une monture de lunettes (100), ce cercle (110) ou arcade présentant une face intérieure (114) destinée à être tournée vers la lentille ophtalmique (120) et un rebord avant (115) destiné à être tourné à l'opposé du visage du porteur de la monture de lunettes (100), le procédé comportant :
- une étape d'acquisition d'un premier profil longitudinal (P1) courant le long de la face intérieure (114) dudit cercle (110) ou arcade, au moyen d'un palpeur (10 ; 20 ; 30) équipé d'une tête de lecture (12 ; 22 : 32),
- une étape de détourage de la lentille ophtalmique (120) avec formation sur son chant d'une nervure d'emboîtement (123) s'étendant suivant un profil longitudinal déduit (P3), dont la géométrie est calculée en fonction dudit premier profil longitudinal (P1),
**caractérisé en ce qu'**il comporte une étape de palpage d'un second profil longitudinal (P2) courant le long du rebord avant (115) dudit cercle (110) ou arcade, au moyen d'un patin d'appui (15 ; 25 ; 35) en V prévu sur la tête de lecture (12 ; 22 ; 32) du palpeur (10 ; 20 : 30) et qui est engagé sur ledit cercle (110) ou arcade pour coulisser le long de ce dernier en restant constamment au contact de deux points dudit cercle (110) ou arcade, dont un point situé sur ladite face intérieure (114) et un autre point situé sur ledit rebord avant (115),
et **en ce que** le profil longitudinal déduit (P3) est également calculé en fonction du second profil longitudinal (P2).

2. Procédé de préparation selon la revendication précédente, dans lequel la géométrie du profil longitudinal déduit (P3) est calculée pour que, à l'issue de l'étape de détourage, la lentille ophtalmique (120) puisse être emboîtée dans le cercle (110) ou arcade, de sorte que la périphérie de sa face avant (121) affleure le rebord avant (115) du cercle (110) ou arcade.

3. Procédé de préparation selon l'une des deux revendications précédentes, comportant une étape de recherche, dans un registre de base de données dont chaque enregistrement est associé à un type de montures de lunettes référencé et contient des données de forme d'un second profil longitudinal propres à ce type de montures de lunettes référencé, d'un enregistrement correspondant à ladite monture de lunettes (100) et, si aucun enregistrement correspondant est trouvé, une étape d'écriture dans un nouvel enregistrement associé à ladite monture de lunettes (100) de données de forme déduites du second profil longitudinal (P2) palpé.

4. Procédé selon l'une des trois revendications précédentes, mis en oeuvre au moyen d'un système comprenant, d'une part, un terminal-client installé du côté d'un client et comportant des moyens informatiques pour enregistrer et transmettre des données de commande de la lentille ophtalmique (120), ces données de commande comportant des données relatives à ladite monture de lunettes (100), et, d'autre part, un terminal-fabricant installé du côté d'un fabricant, qui comporte des moyens informatiques pour recevoir et enregistrer les données de commande transmises par le terminal-client et un dispositif de détourage de ladite lentille ophtalmique (120) conçu pour mettre en oeuvre ladite étape de détourage, le procédé comportant :
- une étape d'élaboration de données de forme déduites du second profil longitudinal (P2) palpé, et
- une étape d'émission par le terminal-client et de réception par le terminal-fabricant des données de commande, ces données intégrant lesdites données de forme.

## Patentansprüche

1. Verfahren zum Vorbereiten einer ophthalmischen Linse (120) für ihre Montage in einem Kreis (110) oder einem Bogen eines Brillengestells (100), wobei dieser Kreis (110) oder Bogen eine innere Fläche (114), die dazu bestimmt ist, zu der ophthalmischen Linse (120) hin zu weisen, und einen vorderen Rand (115), der dazu bestimmt ist, von dem Gesicht des Trägers des Brillengestells (100) weg zu weisen, aufweist, wobei das Verfahren Folgendes umfasst:
- einen Schritt des Erfassens eines ersten longitudinalen Profils (P1), das längs der inneren Fläche (114) des Kreises (110) oder des Bogens verläuft, mittels eines Fühlers (10; 20; 30), der mit einem Lesekopf (12; 22; 32) ausgerüstet ist; und
- einen Schritt des Beschneidens der ophthalmischen Linse (120) unter Bildung einer Einfassungsrippe (123) längs ihrer Kante, die sich längs eines abgeleiteten longitudinalen Profils (P3) erstreckt, dessen Geometrie als Funktion des ersten longitudinalen Profils (P1) berechnet wird,
**dadurch gekennzeichnet, dass** es einen Schritt des Abfühlens eines zweiten longitudinalen Profils (P2) umfasst, das längs der Vorderkante (115) des Kreises (110) oder Bogens verläuft, mittels eines Stützschuhs (15; 25; 35) in V-Form, der am Lesekopf (12; 22; 32) des Fühlers (10; 20; 30) vorgesehen ist und an dem Kreis (110) oder Bogen in Eingriff ist, um längs dieses Letzteren zu gleiten und dabei ständig in Kontakt mit zwei Punkten des Kreises (110) oder Bogens zu bleiben, wovon sich ein Punkt auf der inneren Fläche (114) befindet und der andere Punkt sich an der Vorderkante (115) befindet,
und dass das abgeleitete longitudinale Profil (P3) ebenfalls als Funktion des zweiten longitudinalen Profils (P2) berechnet wird.

2. Vorbereitungsverfahren nach dem vorhergehenden Anspruch, wobei die Geometrie des abgeleiteten longitudinalen Profils (P3) so berechnet wird, dass am Ende des Beschneidungsschrittes die ophthalmische Linse (120) in den Kreis (110) oder Bogen eingesetzt werden kann, derart, dass der Umfang ihrer vorderen Fläche (121) mit dem vorderen Rand (115) des Kreises (110) oder Bogens bündig ist.

3. Vorbereitungsverfahren nach einem der zwei vorhergehenden Ansprüche, das einen Schritt des Suchens in einem Datenbankregister, wovon jeder Eintrag einem Brillengestelltyp zugeordnet ist, auf den Bezug genommen wird und der Formdaten eines zweiten longitudinalen Profils enthält, das diesem Brillengestelltyp, auf den Bezug genommen wird, eigen ist, eines dem Brillengestell (100) entsprechenden Eintrags und, falls kein entsprechender Eintrag gefunden wird, einen Schritt des Schreibens in einen neuen Eintrag, der dem Brillengestell (100) zugeordnet ist, von Formdaten, die von dem abgefühlten zweiten longitudinalen Profil (P2) abgeleitet werden, umfasst.

4. Verfahren nach einem der drei vorhergehenden Ansprüche, das mit einem System ausgeführt wird, das einerseits ein auf Seiten eines Kunden installiertes Kundenendgerät umfasst, das Datenverarbeitungsmittel enthält, um Steuerdaten der ophthalmischen Linse (120) aufzuzeichnen und zu übertragen, wobei diese Steuerdaten Daten enthalten, die auf das Brillengestell (100) bezogen sind, und andererseits ein auf Seiten eines Herstellers, installiertes Herstellerendgerät umfasst, das Datenverarbeitungsmittel, um die Steuerdaten, die von dem Kundenendgerät gesendet werden, zu empfangen und aufzuzeichnen, und eine Vorrichtung zum Beschneiden der ophthalmischen Linse (120), die entworfen ist, um den Beschneidungsschritt auszuführen, enthält, wobei das Verfahren Folgendes umfasst:
- einen Schritt des Entwickelns von Formdaten, die aus dem abgefühlten zweiten longitudinalen Profil (P2) abgeleitet werden, und
- einen Schritt des Sendens durch das Kundenendgerät und des Empfangens durch das Herstellerendgerät der Steuerdaten, wobei diese Daten die Formdaten enthalten.

## Claims

1. A preparation method of preparing an ophthalmic lens (120) for mounting in a rim (110) or a half-rim of an eyeglass frame (100), the rim (110) or half-rim presenting an inside face (114) for being directed towards the ophthalmic lens (120) and a front margin (115) for being directed away from the face of the wearer of the eyeglass frame (100), the method comprising:
- an acquisition step of acquiring a first longitudinal profile (P1) running along the inside face (114) of said rim (110) or half-rim, by means of a feeler (10; 20; 30) fitted with a reader head (12; 22; 32); and
- a shaping step of shaping the ophthalmic lens (120) with an engagement ridge (123) being formed on its edge face and extending in accordance with a deduced longitudinal profile (P3) of a shape that is calculated as a function of said first longitudinal profile (P1);
the preparation method being **characterized in that** it includes a feeling step of feeling a second longitudinal profile (P2) running along the front margin (115) of said rim (110) or half-rim, by means of a V-shaped bearing shoe (15; 25; 35) that is mounted onto the reader head (12; 22; 32) of the feeler (10; 20; 30) and that is engaged on said rim (110) or half-rim to slide therealong so that it constantly makes contact with two distinct points of said rim (110) or half-rim, one of said points being situated on said inside face (114) and the other point being situated on said front margin (115) ; and
**in that** the deduced longitudinal profile (P3) is also calculated as a function of the second longitudinal profile (P2).

2. A preparation method according to the preceding claim, wherein the shape of the deduced longitudinal profile (P3) is calculated so that, at the end of the shaping step, the ophthalmic lens (120) is suitable for being engaged in the rim (110) or half-rim, in such a manner that the periphery of its front face (121) is flush with the front margin (115) of the rim (110) or half-rim.

3. A preparation method according to either one of the two preceding claims, including a searching step of searching in a database registry in which each record is associated with a reference type of eyeglass frame and contains shape data for a second longitudinal profile specific to said reference type of eyeglass frame for a record corresponding to said eyeglass frame (100), and if no corresponding record is found, a writing step of writing a new record associated with said eyeglass frame (100) and containing shape data deduced from the second felt longitudinal profile (P2).

4. A method according to any one of the three preceding claims, implemented by means of a system comprising both a client terminal installed on the premises of a client and including computer means for storing and transmitting ophthalmic lens order data (120), said order data including data relating to said eyeglass frame (100), and also a contractor terminal installed on the premises of a contractor, and including computer means for receiving and storing order data transmitted by the client terminal and a shaper device for shaping said ophthalmic lens (120) and designed to implement said shaping step, the method comprising:
- a step of preparing shape data deduced from the second felt longitudinal profile (P2); and
- a step of the client terminal sending and of the contractor terminal receiving order data, said data including said shape data.
